# EUROPEAN PATENT SPECIFICATION

(11) **EP 1 816 062 B1**
(45) Date of publication and mention of the grant of the patent: **24.02.2010**
(21) Application number: 06025481.0
(22) Date of filing: 08.12.2006
(51) Int. Cl.: B62K 23/02, B62K 23/06, B62M 25/08

(54) **Bicycle shift control device**
Steuerungseinrichtung für eine Fahrradgangschaltung
Dispositif de commande des vitesses de bicyclette

(30) Priority: 03.02.2006 US 346160
(43) Date of publication of application: 08.08.2007
(73) Proprietor: SHIMANO INC., Osaka 590-8577 (JP)
(72) Inventor: Nakano, Keisuke, Sakai City Osaka 590-8577 (JP)
(74) Representative: Hofmann, Harald

(56) References cited:
- EP-A- 1 342 655
- EP-A- 1 582 452
- US-A- 4 945 785
- US-A- 6 073 730
- US-A- 6 129 580
- US-A1- 2005 223 840

## Description

### Field of the Invention

This invention generally relates to a bicycle shift control device. More specifically, the present invention relates to a bicycle shift control device that includes a switch operating member having a rider operating portion that is adjustable a relative to a base member of shift control device.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. In particular, control devices for braking and/or shifting have been extensively redesigned in recent years.

In the past, bicycle shifters were mechanically operated devices that were sometimes located near the brake levers of the bicycle. Thus, an operating force was typically applied by one of the rider's fingers to operate a shift control lever, which in turn transmitted the operating force to the drive component of a bicycle shifting mechanism by a cable that was fixed at one end to the control lever. More recently, electrical switches have been used instead of mechanical control levers in order to operate the bicycle shifting mechanism. Two examples of electrical shift control devices are disclosed in U.S. Patent No. 6,073,730 and U.S. Patent No. 6,129,580 (both assigned to Shimano, Inc.). These patents disclose a pair of electrical switches may be provided in the side of the bracket body. Another example of this type of electrical shift control device is disclosed in U.S. Patent Application Publication No. 2005/0223840 (assigned to Shimano, Inc.). In this publication, an electrical switch is mounted to the brake lever.

However, these electrical shift control devices do not provide for any type of adjustment or the like to change a relative mounting location of a switch operating member of the switch relative to a base member of shift control device. Thus, the location of the switch operating member of the switch may not be optimal for all riders.

In view of the above, it will be apparent to those skilled in the art from this disclosure that there exists a need for an improved bicycle shift control device. This invention addresses this need in the art as well as other needs, which will become apparent to those skilled in the art from this disclosure. Document EP 1 582 452 discloses a bicycle control device according to the preamble of claim 1.

### SUMMARY OF THE INVENTION

One object of the present invention is to provide a bicycle control device having an electrical switch in which a relative mounting location of a switch operating member of the switch relative to a base member of shift control device can be adjusted.

Another object of the present invention is to provide a bicycle control device having an electrical switch which can accommodate different rider's hand sizes and/or shifting preferences.

The foregoing objects can basically be attained by providing a bicycle control device basically comprises a base member, an electrical switch, a switch operating member and an adjusting arrangement. The base member is configured to be attached to a bicycle. The switch operating member has a rider operating portion. The adjusting arrangement is configured to change a relative distance between the base member and the rider operating portion. In the illustrated embodiment, bicycle control device basically comprises a base member, a control lever and an electrical switch. The control lever has a first end pivotally attached to the base member and a second free end spaced longitudinally from the first end of the control lever. The electrical switch is adjustably mounted to the control lever by a mounting arrangement that is configured to selectively secure the electrical switch in at least two different mounting locations on the control lever. The switch operating member of the electrical switch is adjustably mounted to the control lever to selectively secure the electrical switch in at least two different mounting locations relative to the control lever.

These and other objects, features, aspects and advantages of the present invention will become apparent to those skilled in the art from the following detailed descriptions, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of bicycle equipped with a pair of bicycle control (brake/shift) devices (only one shown) coupled to a drop type handlebar in accordance with a preferred embodiment of the present invention;

Figure 2 is a side elevational view of one of the bicycle control (brake/shift) devices in accordance with the present invention;

Figure 3 is a front elevational view of the bicycle control (brake/shift) device illustrated in Figure 2 in accordance with the present invention;

Figure 4 is a rear elevational view of the bicycle control (brake/shift) device illustrated in Figures 2 and 3 in accordance with the present invention;

Figure 5 is a cross sectional view of the bicycle control device illustrated in illustrated in Figures 2-4 in accordance with the present invention as seen along section line 5-5 of Figure 3;

Figure 6 is an enlarged, partial rear elevational view of the brake lever and the electrical shift switch with a first one of the switch operating members mounted to the control shaft of the electrical shift switch;

Figure 7 is an enlarged, partial cross sectional view of the brake lever with the electrical shift switch shown in elevation;

Figure 8 is an enlarged, partial rear elevational view of the brake lever and the electrical shift switch with a second one of the switch operating members mounted to the control shaft of the electrical shift switch;

Figure 9 is an enlarged, partial rear elevational view of the brake lever and the electrical shift switch with a third one of the switch operating members mounted to the control shaft of the electrical shift switch; and

Figure 10 is a side elevational view of a bicycle control (brake/shift) device having a pivotally mounted switch operating member in accordance with an alternate embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

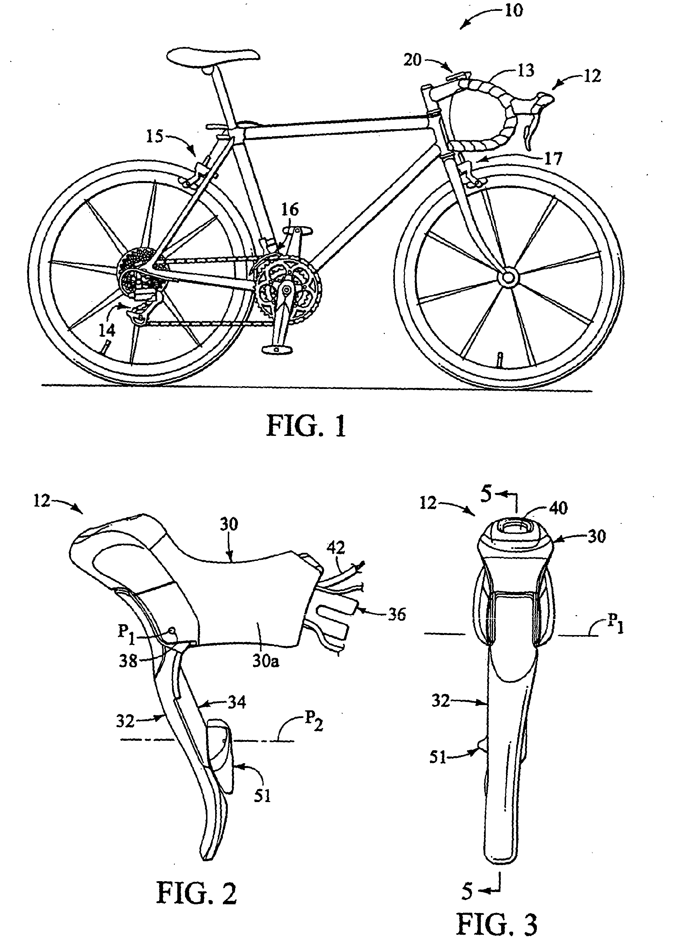

Referring initially to Figure 1, a bicycle 10 is illustrated with a pair of control devices 12 (only one shown in Figure 1) mounted in a drop type bicycle handlebar 13 in accordance with one embodiment of the present invention. One of the control devices 12 is operatively coupled to a rear electronic derailleur 14 and a rear braking device 15, while the control device 12 is operatively coupled to a front electronic derailleur 16 and a front braking device 17. The right and left hand side control devices 12 are essentially identical in construction and operation, except that they are mirror images. Thus, only one of the control devices 12 will be discussed and illustrated herein.

Since the parts of the bicycle 10 are well known in the art, the parts of the bicycle 10 will not be discussed or illustrated in detail herein, except for the parts relating to the control devices 12 of the present invention. Moreover, various conventional bicycle parts such as brakes, derailleurs, additional sprocket, etc., which are not illustrated and/or discussed in detail herein, can be used in conjunction with the present invention.

Preferably, a cycle computer 20 is operatively coupled between the control devices 12 and the rear and front electronic derailleurs 14 and 16. Alternatively, the cycle computer 20 can be eliminated such that the control devices 12 are directly electrically coupled to the rear and front electronic derailleurs 14 and 16. In such a case, each of the control devices 12 includes its own built in cycle computer. Also, the bicycle 10 is preferably provided with a generator such as a hub dynamo, and a battery which can be located in a portion of a frame tube such as the seat tube of the bicycle 10. The generator and the battery are electrically coupled to the control devices 12 and the rear and front electronic derailleurs 14 and 16 in a conventional manner.

As best seen in Figure 2, the bicycle control device 12 basically comprises a lever bracket or base member 30, a control or brake lever 32 movably coupled to the base member 30 about a pivot axis P₁ and an electrical shift switch 34 mounted on the brake lever 32. The base member 30 is mounted to the bicycle handlebar 13 by a conventional tube clamp 36 that is attached to the rear end of the base member 30. The tube clamp 36 is a conventional metal clamp and will not be discussed and/or illustrated in detail herein.

As seen in Figures 2-5, the base member 30 is configured as a rider hand grip part or drop handlebar bracket body 30a having a first end with a handlebar mounting structure for mounting to the drop type handlebar 13 and a second end pivotally supporting the brake lever 32. Thus, the base member 30 has a generally rectangular transverse cross section with rounded corner such that the drop handlebar bracket body 30a includes an upper wall, a bottom wall and a pair of sidewalls. The tube clamp 36 is attached to the first end of the drop handlebar bracket body 30a for mounting to the drop type handlebar 13. The second end of the drop handlebar bracket body 30a pivotally supports the brake lever 32 by a pivot pin 38. Preferably, the base member 30 has a pair of flanges that the brake lever 32 is located between. In the illustrated embodiment, the base member 30 has an electrical unit 40 that is electrically coupled to the electrical shift switch 34 and selectively wired to the cycle computer 20 and/or one of the rear and front electronic derailleurs 14 and 16.

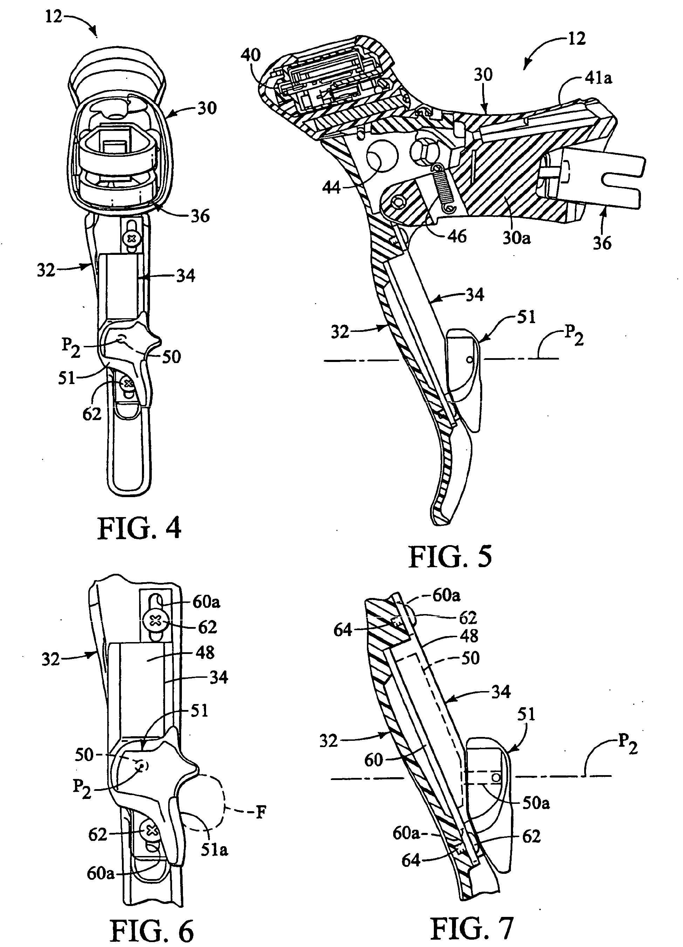

As best seen in Figure 5, the brake lever 32 is a cable operated brake lever that is pivotally mounted to the base member 30 for performing a bicycle braking operation. In other words, the brake lever 32 is attached to a brake cable 42 to operate one of the braking devices 15 and 17. In this illustrated embodiment, the electrical shift switch 34 is fixedly coupled to the control lever 32 to move therewith.

As seen in Figure 5, the brake lever 32 has a first end pivotally attached to the base member 30 and a second free end spaced longitudinally from the first end of the brake lever 32, with the electrical shift switch 34 mounted to the brake lever 32. More specifically, the brake lever 32 has a pair of axially aligned openings 44 that receive an end barrel or fitting of the brake cable 42. In other words, the aligned openings 44 of the control lever 32 form a cable attachment structure for the brake cable 42. Thus, the control lever 32 is a cable operated brake lever that is pivotally mounted to the base member 30 for performing a bicycle braking operation. A return spring 46 is operatively coupled between the brake lever 32 and the base member 30 to bias the brake lever 32 to a rest position. The return spring 46 is preferably a coil tension spring that is elongated when the brake lever 32 is moved from the rest position to a braking position. Of course, it will be apparent to those skilled in the art from this disclosure that the brake lever 32 can be replaced with a dual action control (shifting/braking) lever that is configured and arranged as both a brake lever and a shift lever for both braking operations and gear shifting operations.

Referring to Figures 6, 8 and 9, the electrical shift switch 34 has a switch housing 48 that encloses an electrical contact arrangement 50 and a plurality of switch operating members 51, 52 and 53. The electrical contact arrangement 50 is provided with a pivoting portion or control shaft 50a that operates the electrical shift switch 34 in a conventional manner. The configuration of the electrical contact arrangement 50 can be any type of arrangement that can carry out the present invention, and thus, the electrical contact arrangement 50 will not be discussed and/ illustrated in detail herein. In any event, the switch operating members 51, 52 and 53 are selectively mounted one at a time to the control shaft 50a. The switch operating members 51, 52 and 53 that is mounted on the control shaft 50a can then pivot about a pivot axis P₂ of the control shaft 50a between a rest position and an activation position to perform a shifting operation.

The switch operating members 51, 52 and 53 are configured to be selectively mounted one at a time on the control shaft 50a accommodate different rider's hand sizes and/or shifting preferences. A rider's finger F is shown in phantom lines in Figures 6, 8 and 9 to illustrate the relative positions of the rider's finger F relative to the pivot axis P₂ of the control shaft 50a. The switch operating member 51 is provided with a rider operating portion 51a. The switch operating member 52 is provided with a rider operating portion 52a. The switch operating member 53 is provided with a rider operating portion 53a. These rider operating portions 51a, 52a and 53a are configured and arranged such that when the switch operating members 51, 52 and 53 are selectively mounted to the control shaft 50a, the rider operating portions 51a, 52a and 53a will be located at different relative distances from the base member 30. In other words, each of the rider operating portions 51a, 52a and 53a is a rider engagement projection that is arranged to be located at a different relative location as determined relative to a longitudinal axis of the brake lever 32 when each of the switch operating members 51, 52 and 53 is selectively mounted to the control shaft 50a of the electrical switch 34. Thus, each of the rider operating portions 51a, 52a and 53a has a different operating location along the length of the brake lever 32. With this arrangement, the rider can easily change a relative distance between the base member 30 and the rider operating portion by change the rider operating portions 51a, 52a and 53a. While only three different switch operating members 51, 52 and 53 are illustrated, it will be apparent to those skilled in the art from this disclosure that additional switch operating members can be provided to provide more options to the rider. These different switch operating members 51, 52 and 53 can all be included as part of a kit with the bicycle control device 12 and/or can a separately purchased accessory for the bicycle control device 12.

As seen in Figure 6, the rider operating portion 51 a of the switch operating member 51 is a rider engagement projection that slightly projects outwardly past a side edge of the brake lever 32. The rider operating portion 51 a of the switch operating member 51 is arranged to be located between the pivot axis P₂ of the control shaft 50a and the second or free end of the brake lever 32 as determined relative to a longitudinal axis of the brake lever 32 when of the switch operating member 51a is mounted to the control shaft 50a (i.e., the pivoting portion) of the electrical switch 34.

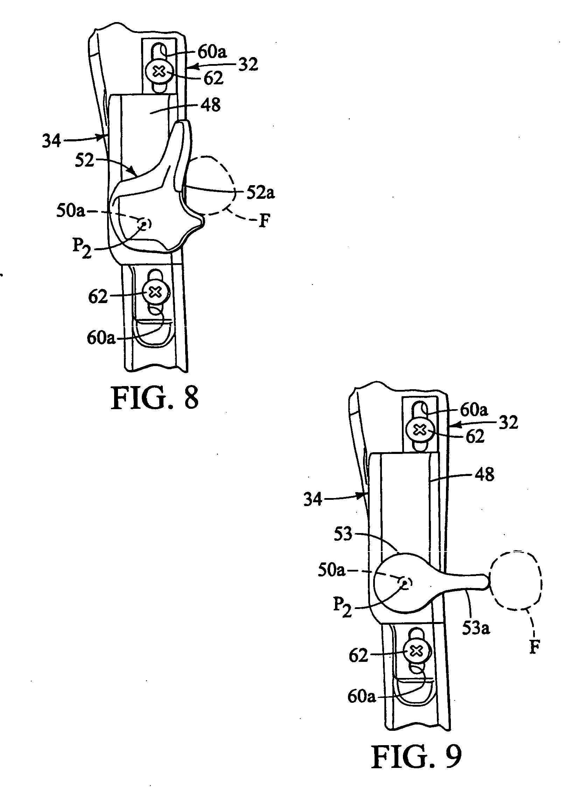

As seen in Figure 8, the rider operating portion 52a of the switch operating member 52 is a rider engagement projection that slightly projects outwardly past a side edge of the brake lever 32. The rider operating portion 52a of the switch operating member 52 is arranged to be located between the pivot axis P₂ of the control shaft 50a and the first (pivotally supported) end of the brake lever 32 as determined relative to a longitudinal axis of the brake lever 32 when of the switch operating member 52a is mounted to the control shaft 50a (i.e., the pivoting portion) of the electrical switch 34.

As seen in Figure 9, the rider operating portion 53a of the switch operating member 53 is a rider engagement projection that slightly projects outwardly past a side edge of the brake lever 32. The rider operating portion 53a of the switch operating member 53 is arranged to be aligned with the pivot axis P₂ of the control shaft 50a and the first (pivotally supported) end of the brake lever 32 as determined relative to a longitudinal axis of the brake lever 32 when of the switch operating member 53a is mounted to the control shaft 50a (i.e., the pivoting portion) of the electrical switch 34.

Moreover, as seen in Figures 6-9, the electrical shift switch 34 is adjustably mounted to the brake lever 32 to be mounted at a plurality of mounting locations along the length of the brake lever 32 to change a relative distance between the base member 30 and one of the rider operating portions 51a, 52a or 53a that is currently mounted to the control shaft 50a. In particular, the electrical shift switch 34 is adjustably mounted to the brake lever 32 by a mounting arrangement that is configured to selectively secure the electrical shift switch 34 in at least two different mounting locations on the brake (control) lever 32. The mounting arrangement of the electrical switch 34 includes a housing mounting member 60 having a pair of elongated slots 60a and a pair of fasteners 62. The fasteners 62 extend through the slots 60a to interconnect the electrical shift switch 34 to the brake lever 32 with the slots 60a being arranged to change a relative distance between the base member 30 and the electrical shift switch 34 as measured along the brake lever 32 from the first (pivotally supported) end of the brake lever 32. The fasteners 62 are preferably screws that are threaded into a pair of threaded holes 64 of the brake lever 32.

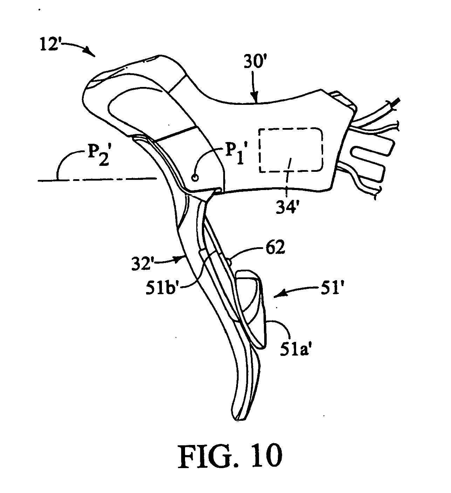

Alternatively, as seen in Figure 10, the present invention can be applied to a bicycle control device 12' in which a lever bracket or base member 30' is provided with a pivotally mounted control (brake/shift) lever 32', an internal electrical shift switch 34' and a pivotally mounted switch operating member 51'. The control lever 32' is movably coupled to the base member 30' to pivot about a pivot axis P_{1'} to perform a braking operation and the switch operating member 51' is movably coupled to the base member 30' to pivot about a pivot axis P_{2'} to perform a shifting operation. The switch operating member 51' has a rider operating portion 51 a' mounted on a lever portion 51b'. The rider operating portion 51a' is configured and arranged can be adjusted relative to the base member 30' using a single one of the fasteners or screws 62. More specifically, one of the rider operating portion 51a' and the lever portion 51b' is provided with a slot (not shown) that receives the one of the screws 62 for adjusting the rider operating portion 51a' at one of a plurality of different locations as determined relative to a longitudinal axis of the control lever 32'. It should also be noted that it will be apparent to those skilled in the art from this disclosure that differently shaped rider operating portions (not shown) can be selectively mounted on the lever portion 51b' to effectively change the location of a rider engagement projection of the rider operating portion.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle control device (12) comprising:
a base member (30);
a control lever (32) having a first end pivotally attached to the base member (30) and a second free end spaced longitudinally from the first end of the control lever (32); and
an electrical switch (34) mounted to the control lever (32)
**characterized in that** the electrical switch (34) is adjustably mounted to the control lever (32) by a mounting arrangement (60a, 62) that is configured to selectively secure the electrical switch in at least two different mounting locations on the control lever.

2. The bicycle control device (12) according to claim 1, wherein
the mounting arrangement of the electrical switch includes at least one elongated slot (60a) and a fastener (62) extending through the slot (60a) to interconnect the electrical switch (34) to the control lever (32) with the slot being arranged to change a relative distance between the base member and the electrical switch as measured along the control lever from the first end.

3. The bicycle control device (12) according to claim 2, wherein
the mounting arrangement of the electrical switch includes a pair of elongated slots (60a) and a pair of fasteners (62) with one of the fasteners extending through one of the slots to interconnect the electrical switch to the control lever.

4. The bicycle control device (12) according to claim 2 or 3, wherein
the or each fastener is a screw that is threaded into a threaded hole of the control lever.

5. The bicycle control device (12) according to any one of claims 1 to 4, wherein
the control lever (32) includes a cable attachment structure (44) at the first end of the control lever (32).

6. The bicycle control device (12) according to any one of claims 1 to 5, wherein
the base member (30) includes a drop handlebar bracket body (30a) having a first end with a handlebar mounting structure and a second end with the control lever (32) thereto.

7. A bicycle control device (12) according to claim 1, comprising:
the base member (30) configured to be attached to a bicycle;
the electrical switch (34);
a switch operating member (51, 52, 53) having a rider operating portion (51a, 52a, 53a);
an adjusting arrangement configured to change a relative distance between the base member and the rider operating portion.

8. The bicycle control device according to claim 7, further comprising
a control lever (32) having a first end pivotally attached to the base member and a second free end spaced longitudinally from the first end of the control lever.

9. The bicycle control device according to claim 8, wherein
the rider operating portion (51a, 52a, 53a)of the switch operating member (51, 52, 53) is located adjacent at a position between the first and second ends of the control lever (32).

10. The bicycle control device according to any one of claims 7 to 9, wherein
the electrical switch in directly mounted on the control lever.

## Patentansprüche

1. Fahrradsteuervorrichtung (12), umfassend:
ein Basiselement (30);
einen Steuerhebel (32), aufweisend ein erstes Ende, das schwenkbar an dem Basiselement (30) befestigt ist und ein zweites freies Ende, in Längsrichtung beabstandet von dem ersten Ende des Steuerhebels (32); und
einen elektrischen Schalter (34), montiert an dem Steuerhebel (32), **dadurch gekennzeichnet, dass** der elektrische Schalter (34) einstellbar montiert ist bezüglich des Steuerhebels (32) durch eine Montageanordnung (60a, 62), die konfiguriert ist zum selektiven Sichern des elektrischen Schalters in zumindest zwei unterschiedlichen Montageorten an dem Steuerhebel.

2. Fahrradsteuervorrichtung (12) nach Anspruch 1, bei welcher die Montageanordnung des elektrischen Schalters zumindest einen länglichen Schlitz (60a) und einen Festmacher (62) umfasst, sich erstreckend durch den Schlitz (60a) zur wechselseitigen Verbindung des elektrischen Schalters (34) mit dem Steuerhebel (32), wobei der Schlitz angeordnet ist zum Verändern eines relativen Abstandes zwischen dem Basiselement und dem elektrischen Schalter, wenn gemessen entlang dem Steuerhebel von dem ersten Ende.

3. Fahrradsteuervorrichtung (12) nach Anspruch 2, bei welcher die Montageanordnung des elektrischen Schalters ein Paar von länglichen Schlitzen (60a) und ein Paar von Festmachern (62) umfasst, wobei einer der Festmacher sich durch einen der Schlitze erstreckt, zur wechselseitigen Verbindung des elektrischen Schalters mit dem Steuerhebel.

4. Fahrradsteuervorrichtung (12) nach Anspruch 2 oder 3, bei welcher der oder jeder Festmacher eine Schraube ist, im Gewindeeingriff mit einer Gewindebohrung des Steuerhebels.

5. Fahrradsteuervorrichtung (12) nach einem der Ansprüche 1 bis 4, bei welcher der Steuerhebel (32) eine Kabelbefestigungsstruktur (44) an dem ersten Ende des Steuerhebels (32) umfasst.

6. Fahrradsteuervorrichtung (12) nach einem der Ansprüche 1 bis 5, bei welcher das Basiselement (30) einen Rennlenkerklammerkörper (30a) enthält, aufweisend ein erstes Ende mit einer Lenkstangenmontagestruktur und ein zweites Ende mit dem Steuerhebel (32) daran.

7. Fahrradsteuervorrichtung (12) nach Anspruch 1, umfassend
ein Basiselement (30), konfiguriert um an einem Fahrrad befestigt zu werden;
den elektrischen Schalter (34);
ein Schaltbetätigungselement (51, 52, 53), aufweisend einen Fahrerbetätigungsabschnitt (51a, 52a, 53a);
eine Einstellanordnung, konfiguriert zum Verändern einer relativen Entfernung oder eines relativen Abstandes zwischen dem Basiselement und dem Fahrerbetätigungsabschnitt.

8. Fahrradsteuervorrichtung (12) nach Anspruch 7, ferner umfassend einen Steuerhebel (32), aufweisend ein erstes Ende schwenkbar befestigt an dem Basiselement und ein zweites freies Ende, in Längsrichtung beabstandet von dem ersten Ende des Steuerhebels.

9. Fahrradsteuervorrichtung (12) nach Anspruch 8, bei welcher der Fahrradbetätigungsabschnitt (51a, 52a, 53a) des Schaltbetätigungselementes (51, 52, 53) angeordnet ist, benachbart zu einer Position zwischen den ersten und zweiten Enden des Steuerhebels (32).

10. Fahrradsteuervorrichtung (12) nach einem der Ansprüche 7 bis 9, bei welcher der elektrische Schalter direkt an den Steuerhebel montiert ist.

## Revendications

1. Dispositif de commande de bicyclette (12) comprenant :
un élément de base (30) ;
un levier de commande (32) ayant une première extrémité attachée pivotante à l'élément de base (30) et une deuxième extrémité libre espacée de manière longitudinale de la première extrémité du levier de commande (32) ; et
un commutateur électrique (34) monté au levier de commande (32)
**caractérisé en ce que** le commutateur électrique (34) est monté de façon ajustable au levier de commande (32) par un agencement de montage (60a, 62), qui est configuré pour attacher de manière sélective le commutateur électrique dans au moins deux emplacements de montage différents sur le levier de commande.

2. Dispositif de commande de bicyclette (12) selon la revendication 1, dans lequel
l'agencement de montage du commutateur électrique comprend au moins une fente élongée (60a) et un élément d'attache (62) s'étendant à travers la fente (60a), pour interconnecter le commutateur électrique (34) au levier de commande (32), la fente étant agencée pour varier une distance relative entre l'élément de base et le commutateur électrique, comme mesurée le long du levier de commande depuis la première extrémité.

3. Dispositif de commande de bicyclette (12) selon la revendication 2, dans lequel
l'agencement de montage du commutateur électrique comprend une paire de fentes élongées (60a) et une paire d'éléments de fixation (62), l'un des éléments de fixation s'étendant à travers l'une des fentes, pour interconnecter le commutateur électrique au levier de commande.

4. Dispositif de commande de bicyclette (12) selon la revendication 2 ou 3, dans lequel
le ou chaque élément d'attache est une vis qui est vissé à l'intérieur d'un trou alésé filetée du levier de commande.

5. Dispositif de commande de bicyclette (12) selon l'une quelconque des revendications 1 à 4, dans lequel
le levier de commande (32) comprend une structure d'attache de câble (44) au niveau de la première extrémité du levier de commande (32).

6. Dispositif de commande de bicyclette (12) selon l'une quelconque des revendications 1 à 5, dans lequel l'élément de base (30) comprend un corps d'élément de fixation de guidon de course (30a) ayant une première extrémité avec une structure de montage de guidon et une deuxième extrémité à laquelle le levier de commande est monté.

7. Dispositif de commande de bicyclette (12) selon la revendication 1, comprenant :
l'élément de base (30) configuré pour être attaché à une bicyclette ;
le commutateur électrique (34) ;
un élément d'actionnement de commutateur (51, 52, 53) ayant une partie d'actionnement utilisateur (51a, 52a, 53a) ;
un agencement d'ajustement configuré pour varier une distance relative entre l'élément de base et la partie d'actionnement utilisateur.

8. Dispositif de commande de bicyclette selon la revendication 7, comprenant, en outre :
un levier de commande (32) ayant une première extrémité attachée pivotante à l'élément de base et une deuxième extrémité libre espacée de manière longitudinale de la première extrémité du levier de commande.

9. Dispositif de commande de bicyclette selon la revendication 8, dans lequel
la partie d'actionnement utilisateur (51a, 52a, 53a) de l'élément d'actionnement de commutateur (51, 52, 53) est située adjacente à une position entre les première et deuxième extrémités du levier de commande (32).

10. Dispositif de commande de bicyclette selon l'une quelconque des revendications 7 à 9,
dans lequel
le commutateur électrique est monté directement sur le levier de commande.
